# EUROPEAN PATENT SPECIFICATION

(11) **EP 1 916 128 B1**
(45) Date of publication and mention of the grant of the patent: **21.07.2010**
(21) Application number: 07119072.2
(22) Date of filing: 23.10.2007
(51) Int. Cl.: B60D 1/64, B62D 53/12

(54) **Traction type fluid coupling and method for, by means of traction type fluid coupling, coupling a mobile fluid distribution system with a mobile fluid container**
Zugantriebs-Flüssigkupplung und Verfahren zur Kopplung eines mobilen Flüssigkeitsverteilungssystems mit einem mobilen Flüssigkeitsbehälter mithilfe der Zugantriebs-Flüssigkupplung
Couplage de fluide de type traction et son procédé, au moyen du couplage de fluide de type traction, couplage d'un système de distribution de fluide mobile avec conteneur de fluide mobile

(30) Priority: 23.10.2006 DK 200601377
(43) Date of publication of application: 30.04.2008
(73) Proprietor: Sørensen, Harry Højvang, 6818 Årre (DK)
(72) Inventor: Sørensen, Harry Højvang, 6818 Årre (DK)
(74) Representative: Holme Patent A/S

(56) References cited:
- EP-A- 0 058 075
- EP-A- 0 551 161
- WO-A-03/078238
- DE-C1- 19 634 372
- GB-A- 2 044 199
- US-A- 4 232 616
- US-A1- 2005 061 836
- US-A1- 2006 255 559

## Description

The present invention relates to a traction coupling for coupling a mobile fluid distribution system and a mobile fluid container of the kind, where the fluid under pressure is pumped from the mobile fluid container to the mobile fluid distribution system, and the traction coupling comprises, a first coupling part with a first through-going opening, where the first coupling part has a first end, which is mounted in fluid communication with the fluid distribution system, and a second end, which is mounted in fluid communication with the mobile fluid container, and the first coupling part is in fluid communication with at least one of said mobile fluid distribution system and one of said mobile fluid container via at least one second coupling part with a second through-going opening.

The invention relates also to a method for using the traction coupling.

Within the scope of the present invention the term "traction coupling" refers to a traction hook between two mobile units, where the traction hook allows for fluid exchange between the two units.

Within the scope of the present invention the term "fluid distribution system" refers to an open system, through which the fluid can be pumped and spread over an area, such as when liquid manure is pumped and spread over a field by an applicator.

Such traction couplings are used to link two vehicles, such that e.g. one vehicle can pull the other vehicle. Coupling by traction couplings, which is e.g. used in agriculture, is conventionally determined by among other things power transmission, fluid transport or current transfer from the pulling vehicle to the connected mobile units.

In order to save time for complicated and time-consuming coupling of such to separate mobile units or vehicles, it has conventionally been preferred to use integrated mobile units or vehicles instead, e.g. a slurry tanker whereupon an applicator or an elevator extension is fixed. Generally, these integrated agricultural vehicles become very large and heavy with a resulting high axle load. This increases the abrasion on the roads and increases the risk of soil compaction on the fields, but it has so far been thought to be the best compromise compared to the problems of using separate mobile units. For instance, an applicator with a working width of e.g. 12 meters typically weighs 3-5 tones and often constitutes about 10% of the total trailer train.

Such a high weight on the applicator gives many disadvantages in connection with e.g. transport to and from the field. When the applicator per se weighs 3-5 tones and the maximum allowed weight of the total trailer train has been reached, the tare weight of the applicator means that either the weight of the freight or the weight of the other parts on the trailer train has to be reduced in order to avoid an excess of the maximum allowed weight. However, in practice it is often seen that a reduction in weight is not made in other places on the trailer train and that the trailer train therefore is driving on the public roads with large overcharge. This means great danger for the other road users.

As an applicator is often placed as the rearmost part of the trailer train, the trailer train becomes very instable when driving without load due to the applicator's high weight. This is due to the fact, that the trailer train thus has a 3-5 tones load placed at the rear end, i.e. as much as 10 meters from the pulling vehicle. Thereby, the applicator functions as a counterbalance to the pulling vehicle and can in unfortunate situations lift the pulling vehicle, thus completely loosing the control over the trailer train.

British patent application No. 857,248 discloses a system wherein a volume of brake fluid is circulated through a traction coupling from a pulling vehicle to a towed trailer by using the pulling vehicle's vacuum system. In a vacuum break system a vacuum is maintained in each vehicle's brake cylinder and the brake fluid remains in a closed system.

European patent application EP 0551161 A1 discloses a mobile fluid distribution system consisting of a slurry elevator extension, which is towed by a mobile fluid container, which is pulled by a tractor. This towed elevator extension is a very simple version of an elevator extension, as the towed slurry elevator extension is pulled by a separate tow bar connected to the mobile fluid container. The elevator extension is provided with a separate hose to the transmission of the slurry manure from the container to the elevator extension. This implies heavy and time-consuming work in connection with the connection and disconnection of the elevator extension. Furthermore, the work with the coupling is dangerous and involves a great risk that persons may get stuck.

The German patent DE 19634372-U-971 C1 discloses a very light trailer in the form of a slurry spreader, which manually can be connected to a pulling vehicle by a branch piece arranged on the trailer through which a fluid can pass. The branch piece also acts as a tow-hook, but the patent description does not contain any instructions of how the tow-hook is designed and how the trailer is connected to the pulling vehicle. However, the slurry manure, which is to be spread through the slurry spreader, is not under pressure, and thus, there are no special requirements for the tightness and strength of the coupling. Thus, the load on the branch piece and its tightness is limited.

GB 2044199 describes a traction coupling according to the preamble of claim 1, comprising a liquid fifth wheel assembly for use with tractor and trailer combinations wherein the trailer includes a tank body for the storage and transportation of fluids, and the tractor includes a pumping station adapted to deliver the fluid stored in the tank. The fifth wheel assembly which is secured to the under side of the trailer has a central opening therein through which passes an enclosed dual concentric suction and discharge pipe structure interconnecting the tank and the pump station

EP 0058075 describes a service line coupling for the fifth wheel of an articulated vehicle.

The above mentioned disadvantages of the prior art is overcome by the features of claim 1, whereby:
in a first aspect of the present invention to provide a traction coupling of the initially mentioned type, by which it is possible faster and easier to connect two vehicles that are to be in fluid communication.
In a second aspect of the present invention is provided a traction coupling of the kind mentioned in the opening paragraph, by which it is possible to connect a mobile fluid distribution system and a mobile fluid container together with a pulling vehicle, without the driver having to leave the pulling vehicle.
In a third aspect of the present invention is provided a traction coupling of the kind mentioned in the opening paragraph, by which it is possible to reduce the load on road and field when driving with and spreading a fluid.
In a fourth aspect of the present invention is provided a traction coupling of the kind mentioned in the opening paragraph, which reduces the axle load on the connected mobile fluid distribution system, the mobile fluid container and the pulling vehicle, thus, reducing the risk of soil compaction.
In a fifth aspect of the present invention is provided a traction coupling and a method of the kind mentioned in the opening paragraph, by which the load and the abrasion on the pulling vehicle is reduced consequently lowering the fuel consumption.
In a sixth aspect of the present invention is provided a traction coupling and a method of the kind mentioned in the opening paragraph, which reduces the extent and necessity of manual work when decoupling and coupling a mobile fluid distribution system and a mobile fluid container.

The novel and unique whereby this is achieved according to the present invention consists in that said second coupling part comprises, a main part (31), which extends into a first end part with reduced outside diameter D_{red}, where at least the first end part is designed to connect the second coupling part to the first coupling part, and where the piped main part has an opposite second end part for connecting the second coupling part with either the mobile fluid distribution system or the mobile fluid container, a ring part arranged rotatably about the first end part with a number of valleys and tops facing the inside of the second coupling part, the first end part is designed with a number of circumferential, evenly distributed holed, and a number of locking beads placed in the break between the ring part and the circumferential holes of the first end part for by rotation of the ring part to be displaced radially, such that when the first and the second coupling part is in a locked position, a bead is jammed between the first coupling part and a top on the ring part.

The fluid can be e.g. slurry manure or liquid chemicals. As slurry manure and liquid chemicals are often transported over long distances from the place of collection to the place of application or deposition it is however desirable that the coupling can be made quickly, effectively and safely. This is advantageously achieved by using the traction coupling according to the present invention, by which the number of couplings points between the mobile fluid distribution system and the mobile fluid container is reduced to the smallest possible. The use of separate fluid transported hoses and towhooks is advantageously eliminated as the traction coupling meets both functions.

When the mobile fluid distribution system is mounted on a trailer in the form of an applicator, the first coupling part and the second coupling part can quickly and easily come in contact with each other. The fluid distribution system on the trailer can be left on the place of application, when a new load of fluid is to be collected, and thus, it does not have to come with the fluid container and the pulling vehicle. Hereby, the abrasion on the road network and the use of fuel is advantageously reduced.

Using the traction coupling and the applicator according to the present invention is consequently an environmentally preferable and cost-saving alternative to the prior art, by which the risk of driving with overcharge is furthermore reduced and the traffic safety is improved.

The second coupling part of the traction coupling comprises a main part which extends to the first end part with reduced outside diameter, where at least the first end part is designed to connect the second coupling part to the first coupling part, and where the pipe shaped main part has an opposite second end part for connecting the second coupling part either to the mobile fluid distribution system or the mobile fluid container, a ring part with a number of valleys and tops facing the interior of the second coupling part, said ring part is rotatable arranged around the first end part, the first end part is designed with a number of circumferential, evenly distributed holes, and a number of locking beads placed in the gap between the ring part and the holes of the first end part, in order to be radially displaced during rotation, thus when the first and the second coupling part is in a locked position, a locking bead is wedged between the first coupling part and a top.

By rotating the ring part the locking beads can in a simple manner be displaced towards the first coupling part's outer wall and provide a solid and sealed locking of the two coupling parts.

When the traction coupling furthermore comprises a gasket between the first coupling part and the second coupling part, the tightness of the coupling can be ensured further thus avoiding unintended leakage and loss of feed pressure.

The means for rotating the ring part thus displacing the beads for locking the first and the second coupling part can advantageously be an electric motor or hydraulic driven motor connected to the toothed ring. The connection between the means for rotating the toothed ring and the toothed ring can be e.g. mechanical, e.g. teeth on the outer of the toothed ring, a toothed belt, a chain or a spring.

Advantageously the diameter on the circumferential holes of the first end part of the second coupling part can be smaller than the diameter of the beads, thereby in a simple manner ensuring that the beads can be maintained in the space between the ringshaped part and the toothed ring.

In order to obtain a sufficiently high fluid passage for in a convenient and fast manner allowing the fluid to pass through the traction coupling from the fluid container to the fluid distribution system, the continuous opening of the first coupling part and the through-going opening of the second coupling part can advantageously have a cross sectional area of about 25 cm² - 200 cm², preferably about 35 - 175 cm², most preferably about 45 - 150 cm².

When the circumferential outer of the first coupling part is mainly bead-shaped and the form of the inside of the first end part of the second coupling part is complementary to the shape of the circumferential outer of the first coupling part, the center axis of the two coupling parts can easily be placed in an angle in relation to each other, simultaneously maintaining the sealing tightness. The angle can be e.g. smaller than 30°, but is often smaller than 25°.

This obtained freedom of movement between the two coupling parts contribute to that the connected fluid distribution system and the mobile unit freely can be pulled by a pulling vehicle, e.g. a tractor, on any base regardless whether the surface of this base is even, bumpy or full of holes, without risk that the traction coupling absorbs the bumps and starts to leak. When the connected fluid distribution system and the mobile unit turns or changes direction the coupling parts of the traction coupling comply appropriately with the change, thus keeping the coupling tight even at larger manoeuvres. Concurrently with the mobile container being emptied of fluid, it will become lighter and lighter, thereby changing the height of the mobile fluid container. This gradual change in weight will also be able to be absorbed by the traction coupling. When driving straight ahead on a plane base the center axis will substantially be placed in an axial elongation of each other. In a embodiment of the coupling of a mobile fluid distribution system and a mobile fluid container according to the present invention, the traction coupling of the present invention can advantageously be used.

Such an embodiment comprises the steps of assemble one of the first and the second coupling parts on one of the mobile fluid distribution system and the mobile fluid container, adjusting the height level of the mobile fluid distribution system, such that the coupling parts can engage in order to bring the fluid distribution system and the fluid container in fluid communication, and rotate the ring part for locking of the first coupling part and the second coupling part, such that the coupling has a sufficient tensile strength in order to prevent the coupling from decoupling and a sufficient tightness in order to avoid leakage.

Particularly desirable, the height adjustment of the mobile distribution system can at least comprise cordless activation of an energy supply on the mobile fluid distribution system in order to lift or lower the mobile fluid distribution system, such that the two coupling parts flush with each other and easily can engage. The height could for instance be adjusted from the pulling vehicle.

As a mobile fluid container often is a far less specialized unit than a mobile distribution system, the same applicator with a traction coupling according to the present invention can advantageously be used with various mobile fluid containers.

The invention will be described in more detail with reference to the accompanying drawing, where
fig. 1 shows schematically, seen from the side, a trailer train consisting of a tractor pulling a mobile fluid container, which by means of a traction coupling according to the present invention is connected to a mobile fluid distribution system in form of a trailer,
fig. 2 shows, seen in a perspective view, a traction coupling according to the present invention,
fig. 3 shows, seen in perspective, an exploded view of the traction coupling shown in fig. 2, where the assembly fitting and the means for rotating the toothed ring in relation to the ssecond coupling part, for clarity reasons not are included,
fig. 4 shows a sectional view taken along the line V-V in fig. 2, where the ring part of the traction coupling is rotated, such that the two coupling parts are engaged in a lock position with each other,
fig. 4a shows the same, however the axes of the two coupling parts are angular in relation to each other,
fig. 5 shows a fraction of a sectional view taken along the line IV-IV in fig. 4, where the ring part is rotated such that the traction coupling is in its locked position, and
fig. 6 shows the same, where the ring part is turned about the other coupling part until the traction coupling is in its unlocked position.

In the following it is assumed by way of example that the mobile fluid container is a slurry tanker, that the fluid is slurry manure, and that the mobile fluid distribution system is an applicator. These exemplifications are in no manner limiting to the invention, and within the scope of the present invention the fluid can be e.g. another type of liquid manure or chemicals.

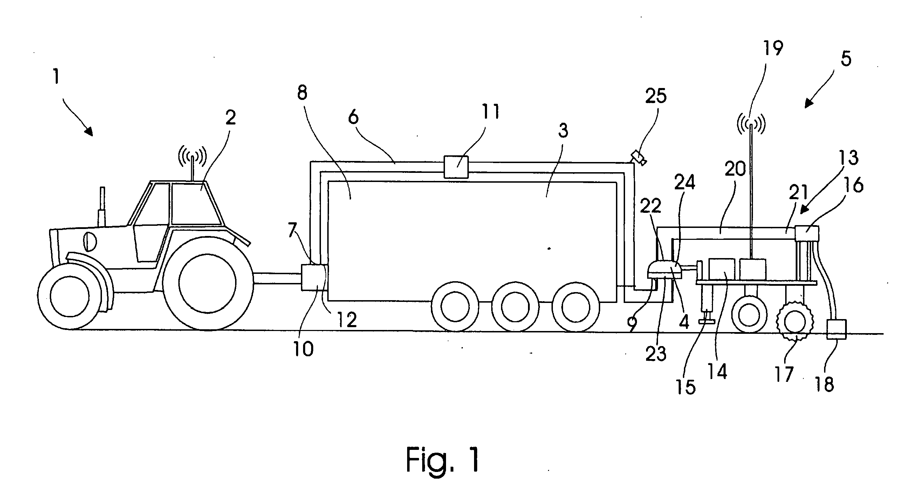

Fig. 1 shows a trailer train, designated generally by the reference numeral 1.

The trailer train 1 consists of a tractor 2, a slurry tanker 3, which by a traction coupling 4 is fluid connected to a fluid distribution system 5.

The slurry manure is directed from the slurry tanker 3 to the fluid distribution system 5 through a first pipe 6, which at a first end 7 is connected to the fluid container 8 of the slurry tanker 3, and at the second end 9 is connected to the traction coupling 4. At the first end 7 of the first pipe 6 a pump 10 and a flowmeter 11 are installed to pump the slurry manure and control the flow of the slurry manure, respectively, from the fluid container 8 to the fluid distribution system 5.

The first end 7 of the first pipe 6 and the pump 10 are in fig. 1 shown to have a length and a connection site 12 on the fluid container 8 of the slurry tanker 3, which is not limiting to the scope of the invention, as the pump 10 could be connected to the fluid container 8 at any site on the fluid container 8.

The fluid distribution system 5 is here shown to be an applicator 13 for slurry manure. The applicator 13 is mobile, as it is constructed as a trailer.

The applicator 13 has an independent energy supply 14, e.g. a combustion engine or a fuel cell, for operating the applicator 13 and activation of the traction coupling 4. The energy supply 14 is by e.g. wires and/or hydraulic hoses, not shown, connected to a jack 15, by which the height of the applicator 13 can be adjusted in proportion to the mobile fluid container 8 when applicator 13 and fluid container 8 are connected by means of the traction coupling 4. Furthermore, the energy supply 14 supplies energy for the slurry manure distribution unit 16 and for the activation of the traction coupling 4.

The applicator is in fig. 1 shown in a very simplified form with an applicator blade 17 and applicator shoe 18. However, the applicator 13 can many different constructions dependent on the task the applicator 13 is used to solve. The applicator 13 can e.g. also comprise couplings between applicator blade 17 and potential depth equipment. Different embodiments of applicable applicators can be purchased at Harsø Maskiner A/S, Fåborgvej 5, DK-6818 Årre. Within the scope of the present invention, the mobile fluid distribution system 5 can also be of the type, which is designed to spread manure over a surface, e.g. through only one hose or through several nozzles.

Furthermore, the applicator 13 has a communication unit 19 with an antenna, for at a distance activating the energy supply 14.

The manure distribution unit 16 of the applicator 13 is connected to the traction coupling 4 through a second pipe 20, which at a first end 21 is connected to a manure distribution unit 16, and at a second end 22 is connected to the traction coupling 4.

The traction coupling 4 consists generally of a first coupling part 23, which via the second end 9 of the first pipe 6 is connected to the fluid container 3, and a with the first coupling part 23 detachably connectable second coupling part 24, which is connected to the second end 22 of the second pipe.

In order for easily being able to position the first coupling part 23 and the second coupling part 24 correctly in relation to each other, when the two coupling parts are to be connected, a camera 25 is advantageously fitted in the proximity of the connection zone, in the shown case on the first pipe 6. By a display, not shown, connected to the camera 25 in or on the tractor 2, the driver of the trailer train 1 has the opportunity to monitor the connection process and thus quickly and easily bring the two coupling parts 23,24 in their correct position by bringing the slurry tanker 3 and the fluid distribution system 5 as close to each other that the second coupling part 24 can be lowered over the first coupling part 23 by adjusting the height level of the jack 15. When the connection of the two coupling parts 23,24 can be controlled from the cockpit of the tractor 1 the driver does not have to leave the cockpit. This both results in a great reduction in time, as a trailer train as shown in fig. 1 can be about 12 metres long, and also a larger security for correct connection.

Other types of visualization possibilities aiding the driver to easily connect a mobile fluid container with a mobile fluid distribution system is known by a person skilled in the art and can thus easily be implemented for use when connecting to the traction coupling according to the present invention. Such visualization systems are commonly known as reverse cameras and reverse sensors from lorries and cars.

Both the first pipe 6 and the second pipe 20 can be supplied with one or more valves, not shown, for opening and closing the fluid passage.

The traction coupling 4 is in fig. 1 shown with the first coupling part 23 fitted on the first pipe 6, and the second coupling part 24 fitted on the second pipe 20. Within the scope of the present invention, the first coupling part 23 can instead be fitted on the second pipe 6, and the second coupling part 24 can be fitted on the first pipe 20.

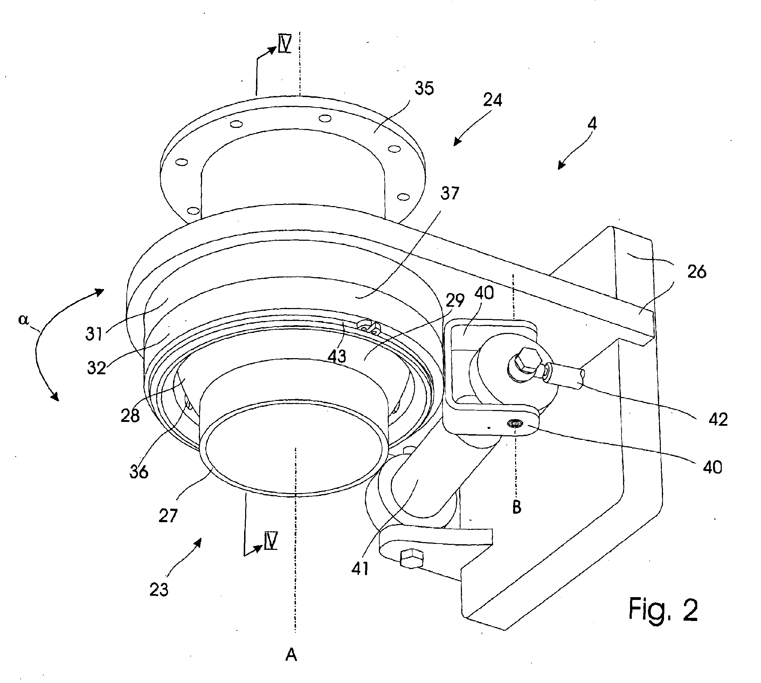

The traction coupling 4 will be described in grater detail below with reference to fig. 2-6.

Fig. 2 shows, in a perspective view, a connected traction coupling 4 according to the present invention, where the first coupling part 23 and the second coupling part 24 is shown arranged about a common axis A.

The traction coupling 4 has an assembly fitting 26 the construction of which is not limiting for the traction coupling according to the present invention, as other types of assembly fitting and positions of these can be used.

The first coupling part 23 is defined by a primarily cylindrical first end 27, elongating over a second end 28 with a principally bead-shaped outer wall 29. The first coupling part 23 has a first through-going opening 30.

The second coupling part 24 consists of a main part 31, which at a first end 31' extends into a first circumferential end part 33 with reduced outside diameter D_{red}, and at the second end 34' extends into a pipe shaped end part 34, with a flange 35 for fluid connecting the second coupling part 24 to the second pipe 20 (not shown). This fluid connection can be applied in several known manners, which will be known to a person skilled in the art. Thus, the flange 35 is not to be considered limiting for the invention, as the connection between the pipes 6,20 and the coupling parts 23,24 e.g. alternatively can be applied by welding or by another form of flange connection. The cylindrical first end 27 of the first coupling part 23 can e.g. be firmly connected to the pipe 6 or be extended directly from the mobile fluid container 8.

In the first circumferential end part 33 of the second coupling part 24 a number of circumferential holes 36 have been constructed. The first circumferential end part 33 is surrounded by a ring part 32 in order to bring the first coupling part 23 and the second coupling part 24 in and out of locking engagement by rotating clockwise and anticlockwise.

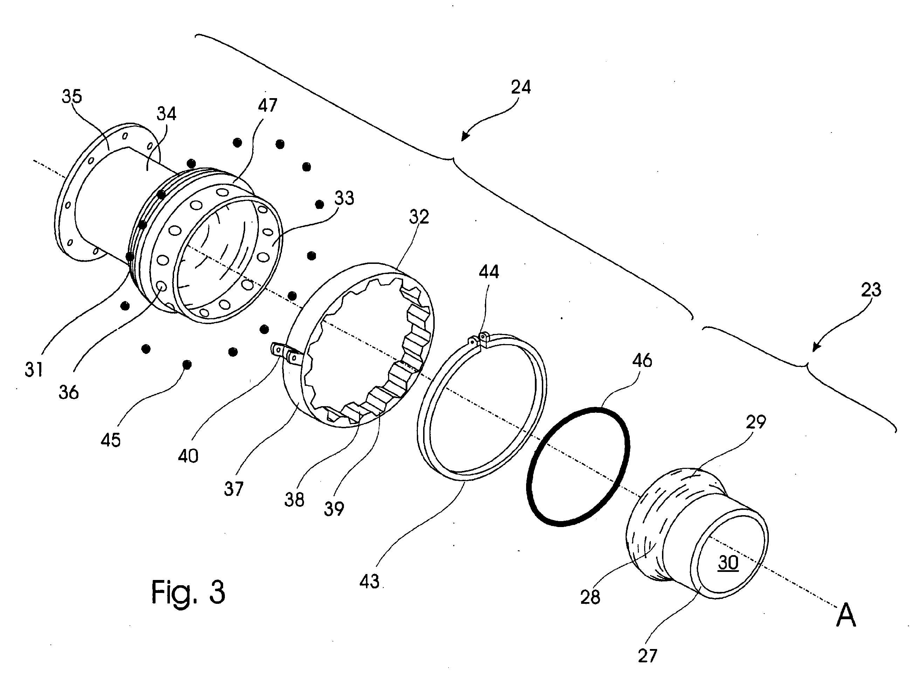

As is best seen in fig. 3 the ring part 32 has an outer 37 and an inside, which inside is constructed with a number of evenly allocated teeth or tops 38, which defines a corresponding number of valleys 39.

On the outer 37 of the ring part 32 a U-shaped strap 40 is placed, for by means of a hydraulic cylinder 41 attached to a hydraulic connection 42, turning the ring part 32 clockwise and anticlockwise in the directions α as shown with a curved arrow in fig. 2. The U-shaped strap 40 is displaceable by means of the hydraulic cylinder 41 thus turning the ring part 32 about the axis B through the connection of the U-shaped strap 40 to the hydraulic cylinder 41.

Rotating the ring part 32 is in the fig. shown activated by a hydraulic cylinder 41, but the rotation α can within the scope of the present invention also be obtained by other means than hydraulic means, e.g. a spring, an electric motor or combinations of these two or with the hydraulic system. A spring can furthermore be fitted about the hydraulic cylinder 41 to counter or prevent unintended loss of pressure if, e.g. an accident should occur and the first coupling part 23 is disconnected from the second coupling part 24. Such a spring can also enable that the hydraulic cylinder 41 only needs to use one junction 42.

The ring part 32 is secured on the first circumferential end part 33 of the second coupling part 24 by a locking ring 43. The locking ring 43 can be secured on the end part 33 exclusively as a result of its spring tension or it can, as shown in fig. 3, have means 44 for clamping or tightening the locking ring 43, thus preventing the ring part 32 from snaping of the first end part 33 during rotation of the ring part 32 or during any other type of load on the traction coupling 4.

The exploded view in fig. 3 shows in more detail how the first coupling part 23 and the second coupling part 24 are constructed.

Around the holes 36 of the first end part 33 on the second coupling part 24 a number of locking beads 45 have been arranged, where the diameter d₁ of the holes 36 are smaller than the diameter d₂ of the locking beads, such that a locking bead 45 can not fall out of a hole 36 but is maintained in one of the holes in the ring part 32. A gasket 46 is inserted between the first coupling part 23 and the second coupling part 24 to ensure that the traction coupling 4 is sealed in all circumstances.

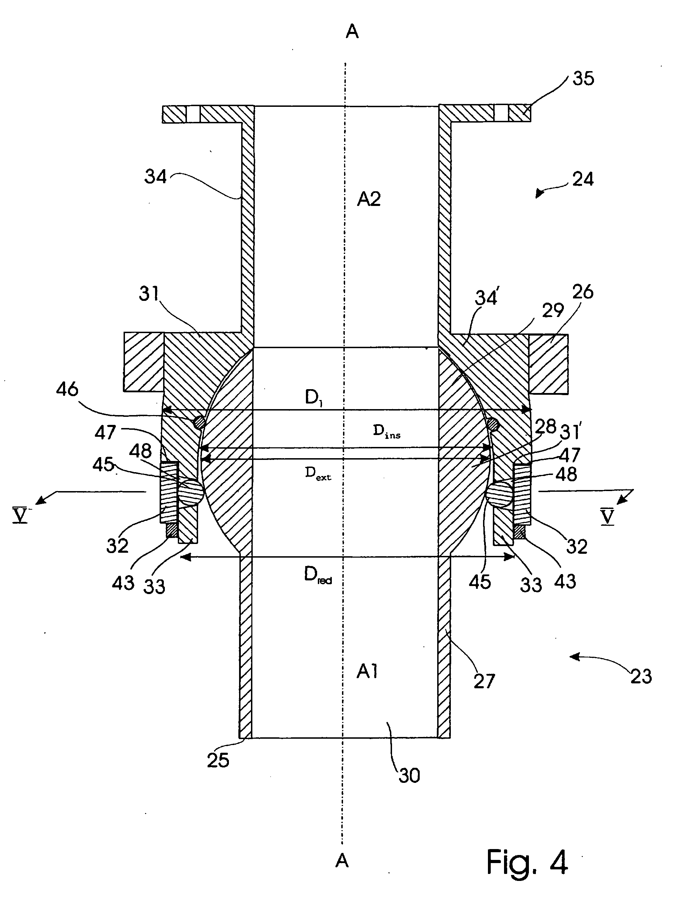

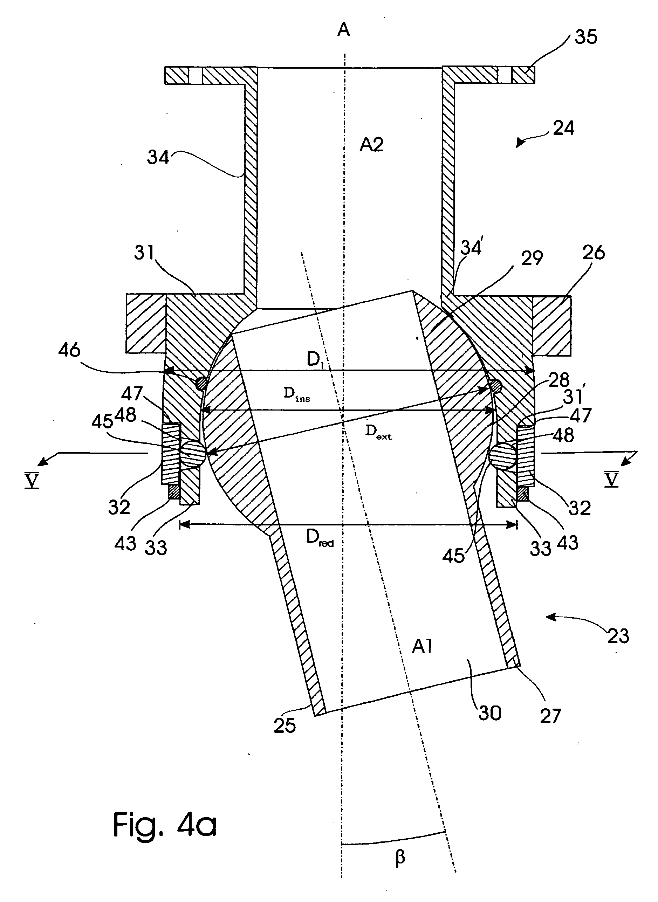

Fig. 4 is a sectional view taken along the line IV-IV in fig. 2 where the first coupling part 23 is locked together with the second coupling part 24 about a common axis A, as the part of the axis A, which extends through the axis of the first coupling part 23, is designated A₁.

The ring part 32 is in fig. 4 rotated such that the beads 45 are wedged between the outer wall 29 of the first coupling part 23 and the tops 38 of the ring part 32.

The first end part 33 of the second coupling part 24 is constructed with a reduced outer diameter D_{red} in relation to the diameter D₁ of the main part 31 of the second coupling part 24 in order to form a circumferential recess 47 for accommodating the ring part 32. The ring part 32 is maintained and fixed rotatably about the recess 47 by the locking ring 43 such that the tops 38 facing the beads 45, which are placed in the holes 36.

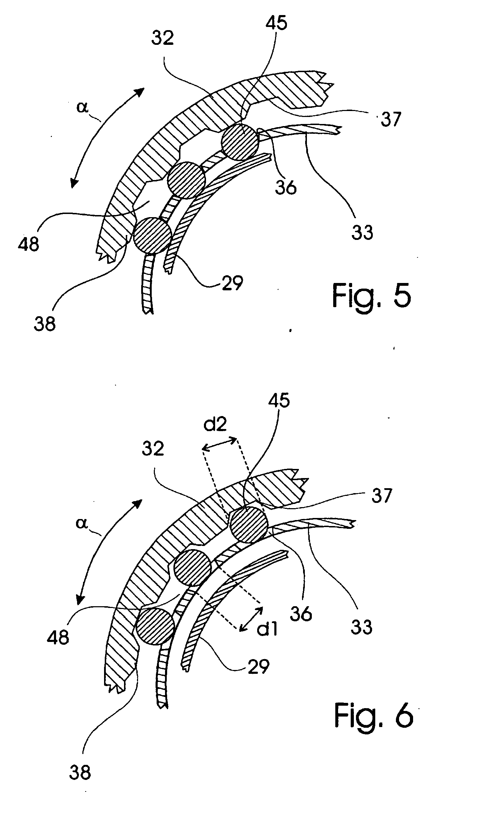

The ring part 32 is rotated by the in fig. 2 shown hydraulic cylinder 41 and the U-shaped strap 40, whereby the locking beads 45 are displaced radially in the gap 48 between the bead-shaped outer wall 29 on the second end 28 of the first coupling part 23, as it is shown in enlarged scale in the in fig. 5 shown fractional view taken along the line V-V in fig. 4.

The first coupling part 23 has a largest outer diameter Dₒᵤₜ, which substantially corresponds to the largest inside diameter dᵢₙₛ of the second coupling part 24, such that an area of contact is created, which is sufficiently large enough to allow for the two coupling parts continuous center axes A1 and A2 to turn in relation to each other in the locked position of the traction coupling, as shown in fig. 4a, which is desirable when driving on an uneven base or when changing the weight of the slurry tanker 3 and the applicator 13 during pumping.

The center axis A1 of the first coupling part 23 and the center axis A2 of the second coupling part 24 can advantageously be turned in a mutual angle β of e.g. as much as about 25° without loosing the large area of contact between the first coupling part 23 and the second coupling part 24.

Fig. 5 shows in more detail the first coupling part 23 and the second coupling part 24 in a locked position and fig. 6 shows the same but in a unlocked position.

When the toothed ring 32 is rotated in one of the arrow's directions the locking beads 45 can be displaced radially towards the other continuous opening 46 of the second coupling part in the gap 48 between the inside of the toothed ring 32 and the outer wall 29 of the first coupling part 23, thus maintaining a locking bead 45 in a position between a top 38 and a hole 36.

By subsequently rotating the toothed ring 32 in the opposite direction, the locking beads are displaced radially away from the through-going opening 46 of the second coupling part 24 in the gap 48 between the inside of the toothed ring 32 and the outer wall 29 of the first coupling part 23, such that the locking bead 45 is displaced to a rest position in a valley 37 of the ring part 32.

The traction coupling is advantageously produced of a corrosion-resistant material, such that the traction coupling has a long life despite the fluid being aggressive. Corrosion can occur when fluid is pumped through the traction coupling, but also when the traction coupling is not in operation, if residues of aggressive fluid remains in the two coupling parts.

## Claims

1. Traction coupling (4) for coupling a mobile fluid distribution system (5) and a mobile fluid container (8) of the kind, where the fluid under pressure is pumped from the mobile fluid container (8) to the mobile fluid distribution system (5), wherein the traction coupling (4) comprises
- a first coupling part (23) with a first through-going opening (30), where the first coupling part (23) has a first end (28), which is mounted in fluid communication with the fluid distribution system (5), and a second end (27), which is mounted in fluid communication with the mobile fluid container (8), and
- the first coupling part (23) is in fluid communication with at least one of said mobile fluid distribution system (5) and one of said mobile fluid container (8) via at least one second coupling part (24) with a second continuous opening, **characterized in, that** said second coupling part (24) comprises
- a main part (31), which extends into a first end part (33) with reduced outside diameter D_{red}, where at least the first end part (33) is designed to connect the second coupling part (24) to the first coupling part (23), and where the piped main part (31) has an opposite second end part (34) for connecting the second coupling part (24) with either the mobile fluid distribution system (5) or the mobile fluid container (8),
- a ring part (32) arranged rotatably about the first end part (33) with a number of valleys (39) and tops (38) facing towards the inside of the second coupling part (24),
- the first end part (33) is designed with a number of circumferential, evenly distributed holes (36), and
- a number of locking beads (45) placed in the break (48) between the ring part (32) and the circumferential holes (36) of the first end part (33) for by rotation of the ring part (22) to be displaced radially, such that when the first (23) and the second coupling part (24) is in a locked position, a bead (45) is jammed between the first coupling part (23) and a top (38) on the ring part (32).

2. Traction coupling (4) according to claim 1, **characterized in, that** the mobile fluid distribution system (5) comprises a trailer in the form of an applicator (13).

3. Traction coupling (4) according to claim 1, **characterized in, that** the diameter d₁ of the holes (36) of the circumferential end part (33) is smaller than the diameter d₂ of the beads (45).

4. Traction coupling (4) according to any one of the claims 1 - 3, **characterized in, that** the traction coupling (4) comprises a gasket (45) between the first coupling part (23) and the second coupling part (24).

5. Traction coupling (4) according to any one of the claims 1 - 4; **characterized in, that** the traction coupling (4) comprises means (40,41,42) for rotating the ring part (22).

6. Traction coupling (4) according to any one of the claims 1 - 4, **characterized in that** the continuous opening (30) of the first coupling part (23) and the continuous opening of the second coupling part (24) has an area of cross section of about 25 cm² - 200 cm², preferably about 35 cm² - 175 cm², more preferably about 45 cm² - 150 cm².

7. Traction coupling (4) according to any one of the claims 1 - 6, **characterized in, that** the circumferential outer wall (29) of the first coupling part (24) is mainly bead-shaped and the shape of the inside of the first end part (33) of the second coupling part (23) is complementary to the shape of the circumferential outer wall (29) of the first coupling part (23).

8. Method of connecting a mobile fluid distribution system (5) and a mobile fluid container (8), **characterized in, that** a traction coupling (4) is used according to any one of the claims 1 - 7.

9. Method according to claim 8 **characterized in, that** the method comprises the steps of
a. mounting one of the first (23) and the second coupling parts to one of the mobile fluid distribution system (5) and the mobile fluid container (8),
b. adjusting the height level of the mobile fluid distribution system (5), such that the coupling parts (23,24) can engage in order to bring the fluid distribution system (5) and the fluid container (8) in fluid communication, and
c. rotating the ring part (32) for locking the first coupling part (32) and the second coupling part (24).

10. Method according to claim 9, **characterized in, that** the method comprises that at least step b comprises a cordless activation of an energy supply (14) on the mobile fluid distribution system (5) to lift or lower this.

## Patentansprüche

1. Traktionskupplung (4) zum Kuppeln eines mobilen Flüssigkeitsverteilungssystems (5) und eines mobilen Flüssigkeitsbehälter (8) von der Art, bei dem die unter Druck stehende Flüssigkeit von dem mobilen Flüssigkeitscontainer (8) zu dem mobilen Flüssigkeitsverteilungssystem (5) gepumpt wird, wobei die Traktionskupplung (4) aufweist:
- ein erstes Kupplungsteil (23) mit einer ersten Durchgangsöffnung (30), wobei das erste Kupplungsteil (23) ein erstes Ende (28) hat, das in fluidischer Kommunikation mit dem Flüssigkeitsverteilungssystem (5) ist und mit einem zweiten Ende (27), das in fluidischer Kommunikation mit dem mobilen Flüssigkeitsbehälter (8) ist, und
- das erste Kupplungsteil (23) in Flüssigkeitskommunikation mit wenigstens dem mobilen Flüssigkeitsverteilungssystem (5) und/oder dem mobilen Flüssigkeitsbehälter (8) über wenigstens ein zweites Kupplungsteil (24) mit einer zweiten kontinuierlichen Öffnung, steht, **dadurch gekennzeichnet, dass** das zweite Kupplungsteil (24) aufweist:
- ein Hauptteil (31), das sich in ein erstes Endteil (33) mit einem reduzierten Außendurchmesser D_{red} , erstreckt, wobei wenigstens der erste Endteil (23) zur Verbindung des zweiten Kupplungsteils (24) mit dem ersten Kupplungsteil (23) ausgebildet ist und wobei der geleitete Hauptteil (31) einen gegenüber liegenden zweiten Endteil (34) zum Verbinden des zweiten Kupplungsteils (24) mit entweder dem mobilen Flüssigkeitsverteilungssystem (5) oder dem mobilen Flüssigkeitsbehälter (8) hat,
- ein Ringteil (32) mit einer Anzahl von Tälern (39) und Erhebungen (38), die in Richtung auf das Innere des zweiten Kupplungsteils (24) weisen, das um den ersten Endteil (33) um den ersten Endteil (33) drehbar angeordnet ist,
- das erste Endteil (33) mit einer Anzahl von umlaufenden, gleichmäßig verteilten Löchern (36) ausgebildet ist, und
- eine Anzahl von Verriegelungskügelchen (35) in dem Durchbruch (48) zwischen dem Ringteil (32) und den umlaufenden Löchern (36) des ersten Endteils (33) angeordnet sind, um bei einer Drehung des Ringteils (22) radial derart verlagert zu werden, dass dann, wenn der erste Kupplungsteil (23) und der zweite Kupplungsteil (24) in einer verriegelten Position sind, ein Kügelchen (45) zwischen dem ersten Kupplungsteil (23) und einer Erhebung (38) an dem Ringteil (32) eingeklemmt wird.

2. Traktionskupplung (4) nach Anspruch 1, **dadurch gekennzeichnet, dass** das mobile Flüssigkeitsverteilungssystem (5) einen Trailer in Form eines Applikators (13) ist.

3. Traktionskupplung (4) nach Anspruch 1, **dadurch gekennzeichnet, dass** der Durchmesser d₁ der Löcher (36) des umlaufenden Endteils (33) kleiner ist als der Durchmesser d₂ der Kügelchen (45).

4. Traktionskupplung (4) nach einem der Ansprüche (3), **dadurch gekennzeichnet, dass** die Tranktionskupplung (4) eine Dichtung (45) zwischen dem ersten Kupplungsteil (23) und dem zweiten Kupplungsteil (24) aufweist.

5. Traktionskupplung (4) nach einem der Ansprüche (4), **dadurch gekennzeichnet, dass** die Traktionskupplung (4) Mittel (40, 41, 42) zum Drehen des Ringteils (22) aufweist.

6. Traktionskupplung (4) nach einem der Ansprüche 1-4, **dadurch gekennzeichnet, dass** die kontinuierliche Öffnung (30) des ersten Kupplungsteils (23) und die kontinuierliche Öffnung des zweiten Kupplungsteils (24) eine Querschnittsfläche von etwa 25 cm² - 200 cm², vorzugsweise von etwa 35 cm² - 175 cm², besonders bevorzugt etwa 45 cm² -150 cm² hat.

7. Traktionskupplung (4) nach einem der Ansprüche 1-6, **dadurch gekennzeichnet, dass** die umlaufende äußere Wand (29) des ersten Kupplungsteils (24) im Wesentlichen kugelförmig ist und die Form des Inneren des ersten Endteils (33) des zweiten Kupplungsteils (24) komplementär zu der Form der umlaufenden äußeren Wand (29) des ersten Kupplungsteils (23) ist.

8. Verfahren zum Verbinden eines mobilen Flüssigkeitsverteilungssystems (5) und eines mobilen Flüssigkeitsbehälter (8), **dadurch gekennzeichnet, dass** eine Traktionskupplung (4) nach einem der Ansprüche 1-7 verwendet wird.

9. Verfahren nach Anspruch 8, **dadurch gekennzeichnet, dass** das Verfahren die folgenden Schritte aufweist:
a. Befestigen des ersten (23) oder des zweiten Kupplungsteiles mit dem mobilen Flüssigkeitsverteilungssystems (5) oder dem mobilen Flüssigkeitsbehälter (8),
b. Einstellen der Höhe des mobilen Flüssigkeitsverteilungssystems (5) derart, dass die Kupplungsteile (23, 24) in Eingriff kommen können, um das Flüssigkeitsverteilungssystem (5) und den Flüssigkeitsbehälter (8) in Flüssigkeitskommunikation zu bringen, und
c. Drehen des Ringteils (33) zum Verriegeln des ersten Kupplungsteils (32) und des zweiten Kupplungsteils (24).

10. Verfahren nach Anspruch 9, **dadurch gekennzeichnet, dass** das Verfahren wenigstens in dem Schritt b eine kabellose Betätigung einer Energieversorgung (14) an dem mobilen Flüssigkeitsverteilungssystem (5) hat, um dieses anzuheben oder abzusenken.

## Revendications

1. Couplage de type traction (4) pour couplage d'un système de distribution de fluide mobile (5) et un conteneur de fluide mobile (8) de la sorte, où le fluide sous pression est pompé du conteneur de fluide mobile (8) jusqu'au système de distribution de fluide mobile (5), où le couplage de type traction comprend
- une première partie de couplage (23) avec une première ouverture à travers (30), où la première partie de couplage (23) a une première extrémité (28), qui est montée en communication fluide avec le système de distribution de fluide (5) et une deuxième extrémité (27), qui est montée en communication fluide avec le conteneur de fluide mobile (8), et
- la première partie de couplage (23) est en communication fluide avec au moins un dudit système de distribution de fluide mobile (5) et un dudit conteneur de fluide mobile (8) via au moins une deuxième partie de couplage (24) avec une deuxième ouverture continue, **caractérisée en ce que** ladite deuxième partie de couplage (24) comprend
- une partie principale (31), qui s'étend jusqu'à une première partie d'extrémité (33) avec un diamètre extérieur réduit D_{red-}, où au moins la première partie d'extrémité (33) est déssinée à connecter la deuxième partie de couplage (24) à la première partie de couplage (23), et où la partie principale tubulaire (31) a une deuxième partie d'extrémité (34) opposée pour connecter la deuxième partie de couplage (24) avec soit le système de distribution de fluide mobile (5), soit le conteneur de fluide mobile (8),
- une partie annulaire (32) arrangée de manière tournante autour du première partie d'extrémité (33) avec un nombre de vallées (39) et sommets (38) face à l'intérieur de la deuxième partie de couplage (24),
- la première partie d'extrémité (33) est dessinée avec un nombre de trous (36) circumférentiels, uniformément repartis, et
- un nombre de billes de verrouillage (45) placées dans la brèche (48) entre la partie annulaire (32) et les trous circumférentiels (36) de la première partie d'extrémité (33) pour qu'ils, en tournant la partie annulaire (22), se déplacent radialement, de sorte que lorsque la première (23) et la seconde (24) partie de couplage sont en position verrouillée, une bille (45) est bloquée entre la première partie de couplage (23) et un sommet (38) sur la partie annulaire (32).

2. Couplage de type traction (4) selon la revendication 1, **caractérisée en ce que** le système de distribution de fluide mobile (5) comprend une remorque sous forme d'un applicateur (13).

3. Couplage de type traction (4) selon la revendication 1, **caractérisée en ce que** le diamètre d₁ des trous (36) de la partie d'extrémité circumférentielle (33) est inférieure que le diamètre d₂ des billes (45).

4. Couplage de type traction (4) selon une quelconque des revendications 1 - 3, **caractérisée en ce que** le couplage de type traction (4) comprend un joint (45) entre la première partie de couplage (23) et la deuxième partie de couplage (24).

5. Couplage de type traction (4) selon une quelconque des revendications 1 - 4, **caractérisée en ce que** le couplage de type traction (4) comprend des moyens (40,41,42) pour tourner de la partie annulaire (22).

6. Couplage de type traction (4) selon une quelconque des revendications 1 - 4, **caractérisée en ce que** l'ouverture continue (30) de la première partie de couplage (23) et l'ouverture continue de la deuxième partie de couplage (24) ont une surface de section transversale d'environ 25 cm² - 200 cm², préférablement d'environ 35 cm² - 175 cm², plus préférablement d'environ 45 cm² - 150 cm².

7. Couplage de type traction (4) selon une quelconque des revendications 1 - 6, **caractérisée en ce que** le mur extérieur circumférentiel (29) de la première partie de couplage (24) est principalement en forme de bille et la forme du côté intérieure de la première partie d'extrémité (33) de la deuxième partie de couplage (23) est complémentaire de la forme du mur extérieur (29) de la première partie de couplage (23).

8. Méthode pour connecter un système de distribution de fluide mobile (5) et un conteneur de fluide mobile (8), **caractérisée en ce qu'**un couplage de type traction (4) est utilisé selon une quelconque des revendications 1 - 7.

9. Méthode selon la revendication 8, **caractérisée en ce que** la méthode comprend les étapes de
a. monter la première (23) ou la deuxième partie de couplage au système de distribution de fluide mobile (5) ou au conteneur de fluide mobile (8),
b. ajuster le niveau d'hauteur du système de distribution de fluide mobile (5), ainsi que les parties de couplage (23,24) peuvent embrayer afin de mettre le système de distribution de fluide (5) et le conteneur de fluide (8) en communication fluide, et
c. tourner la partie annulaire (32) pour verrouiller la première partie (32) et la deuxième partie de couplage (24).

10. Méthode selon revendication 9, **caractérisée en ce que** la méthode comprend qu'au moins étape b comprend une activation sans fil de la fourniture d'energie (14) sur le système de distribution de fluide mobile (5) pour lever ou abaisser ceci.
